Europäisches Patentamt

European Patent Office

Office européen des brevets

(11) Publication number: 0 370 628 A2

# (12) EUROPEAN PATENT APPLICATION

(21) Application number: 89310979.3

(22) Date of filing: 25.10.89

(51) Int. Cl.⁵: G06F 13/42

(30) Priority: 25.10.88 US 262536

(43) Date of publication of application:
30.05.90 Bulletin 90/22

(84) Designated Contracting States:
AT BE CH DE ES FR GB GR IT LI LU NL SE

(71) Applicant: APOLLO COMPUTER INC.
330 Billerica Road
Chelmsford Massachusetts 01824(US)

(72) Inventor: Stumpf, Bernard
50 Acton Road
Chelmsford Massachusetts 01824(US)
Inventor: Kline, Mark
55 Cricket Lane
North Andover Massachusetts 01845(US)
Inventor: Kurtze, Jeffrey D.
4 Skyline Drive
Nashua New Hampshire 03067(US)
Inventor: Bahr, Richard G.
16 Soden Street No.3
Cambridge Massachusetts 02139(US)

(74) Representative: Arthur, Bryan Edward et al
Withers & Rogers 4 Dyer's Buildings Holborn
London EC1N 2JT(GB)

(54) Pipeline computer system having order preservation.

(57) A method and apparatus for preserving the write order in an interruptible pipeline processor wherein each bus transaction is provided with an acknowledgment after the transaction. If the acknowledgment indicates a failed transaction, a rejected signal is generated by the origination of the transaction which causes the effects of the subsequent operation to be cancelled. The transaction sequence is restarted, beginning with the previously failed transaction, and continues with a preserved transaction write order.

EP 0 370 628 A2

## FIELD OF THE INVENTION

The present invention relates to pipeline computer systems and, in particular, interruptible pipeline processors having selected interrupt instruction control.

## BACKGROUND OF THE INVENTION

The bus protocol in high-performance, highly pipelined bus architecture may allow for a high degree of overlapped activity. For instance, arbitration, transfer, decoding and transfer acknowledge may be 4 stages of request handling that may be underway for 4 distinct requests at the same moment. Thus, First-In, First-Out (FIFO) style buffering which will, under certain conditions, fill up, either causing a transaction to wait for the FIFO to become available or send a BUSY response to the requesting device, asking it to try again at a later time. It is not desirable to have a device occupy the bus while waiting for another device to make its buffers available since this makes the bus bandwidth unavailable for other transfers, causing valuable bus bandwidth to be needlessly tied up. This problem becomes more severe in the case of a multiprocessor system sharing a single bus resource, since the bus may become the system bottleneck. Moreover, in certain implementations a slow device on the bus can magnify this problem even further, since the whole system will start to run at the speed of this slow device.

Moreover, if a device is in the process of performing multiple writes across the bus, it must either wait for a previous write to be acknowledged as accepted before sending another write, or it must obey some protocol that will insure that write order is preserved. Waiting for a previous write to be acknowledged before issuing another write is lower performance than sending another write as soon as possible. However, in some pipelined system bus protocols, sending another data write will likely not preserve write order of data, causing processing errors.

Therefore, it is important to preserve write order so that information may be passed in control blocks from process to process, processor to processor, and I/O system to processors. Control blocks are normally formulated by assembling the information into some predetermined format and then setting some ready flag or setting up some queue pointer. However, if a write to a ready flag manages to occur prior to a write setting up some information in the control block, the receiving process will get a corrupted message.

## SUMMARY OF THE INVENTION

The computer system having write order preservation for the bus data transfers according to the present invention requires a minimum of one unused cycle between successive writes by a given device, where "unused" means unused by that particular device for a write operation, and a REJECT signal to indicate to all devices that the command that they just received is invalid.

The protocol, according to the present invention, has been applied to a specific bus architecture; however, the concept is extendible to other architectures. The bus is a synchronous bus that is capable of initiating a read or a write operation in every bus cycle. Bus arbitration may also occur in a single cycle, which may be overlapped with other transfers, so that it is quite possible that a write operation could be initiated in every cycle. Every bus transaction is accompanied by an acknowledgment from the receiving device in the second cycle after the transaction bus cycle. The acknowledgment cycles are completely overlapped with other transactions so they do not affect bus bandwidth.

## BRIEF DESCRIPTION OF THE DRAWINGS

These and further features of the present invention will be better understood by reading the following detailed description of the drawings, wherein:

Fig. 1 is a block diagram of one embodiment of a computer system implementation of the present invention; and

Fig. 2 is a flow-chart of one embodiment of the present invention.

## DETAILED DESCRIPTION OF THE INVENTION

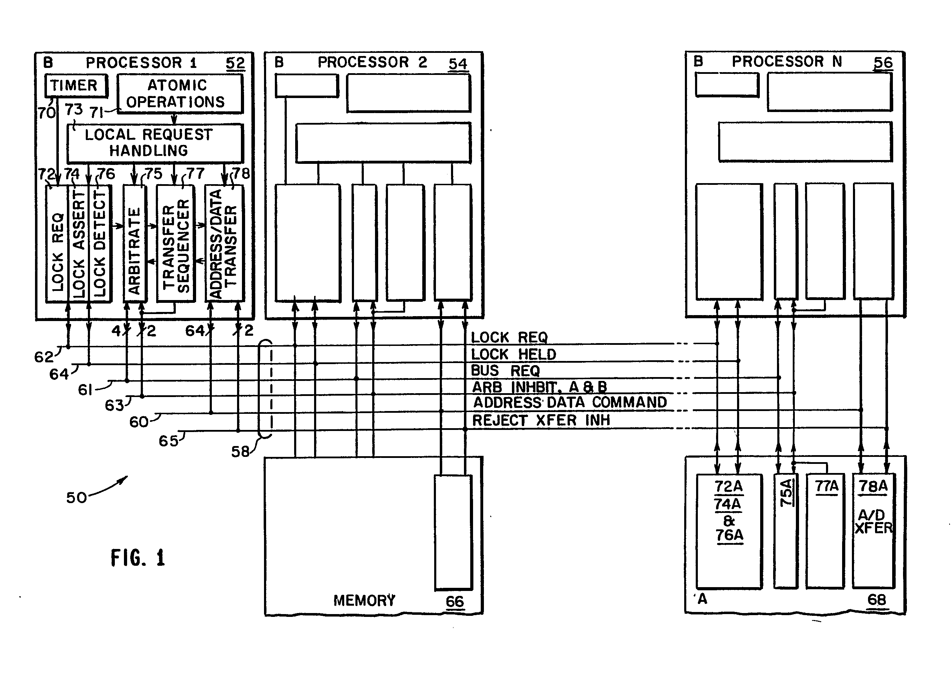

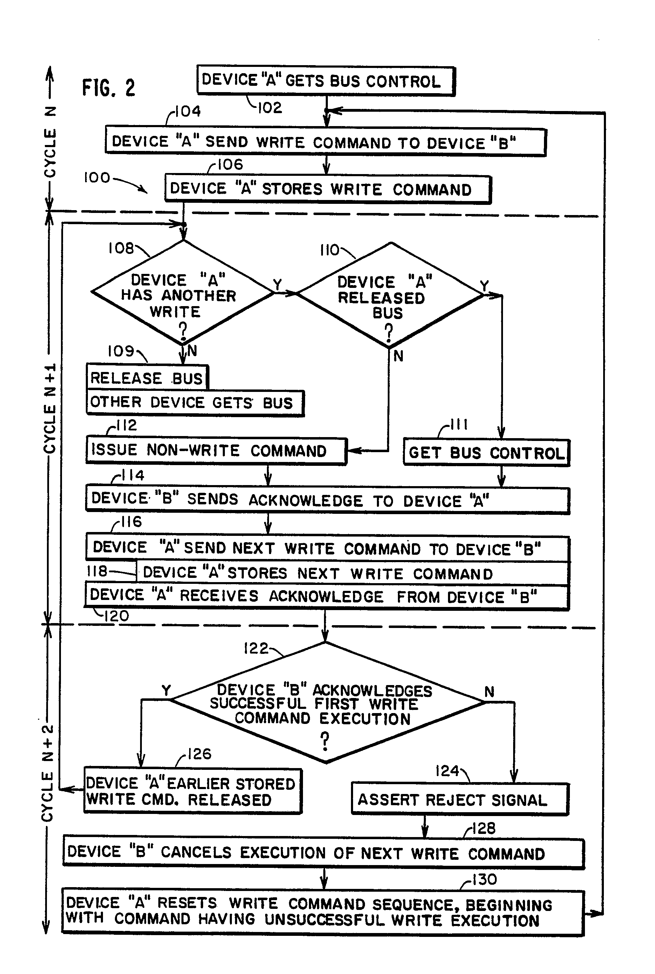

In relation to the exemplary system blade diagram 50 of Fig. 1 (and the flow chart of Fig. 2), the operation of the protocol is as follows. A first device 52 gets the bus 58 (102) and sends a write command to a second device 68 (104), this write operation is stored (106) in a holding register in transfer element 78 until an acknowledgment to the bus transaction is received from the first device 52 on leads 65. If the first device has another write to issue 108, it can hold (110) onto the bus 58 and execute or other non-write command for a cycle (112), and then issue the write (116) in the next cycle or release (109) the bus and rerequest (110) the bus, being granted access to the bus in the following cycle at which time it can then issue the write (116) on the conditions discussed in APOLL-111XX, entitled MULTIPROCESSOR INTERLOCK, and APOLL-112XX, entitled A QUASI-FAIR BUS ARBITRATION SCHEME WITH DEFAULT OWNER SPEEDUP, both filed concurrently herewith and incorporated herein by reference. If the first device does either of the latter, then it should be receiving (120) and acknowledgment sent from the second device 68 (114) in the same cycle as first device 52 is sending out the second write (116). If the acknowledgment indicates (122) that second device 68 was busy and unable to accept the first write command, first device 52 asserts the REJECT signal (124) on one of leads 65 in the next cycle indicating that the write sent in the previous cycle should be cancelled. This REJECT signal is looked at by all devices (e.g., 54, 56 and 66), not jest the second device (68) since write order must be preserved across all of the address space not just within a range of addresses. Upon receiving the REJECT signal, any device that received a command in the previous cycle would cancel that command (128). The sending device must back up (130) and send the first write again (104), followed by the second write (116), essentially starting the processing of its command stream over again, starting with the write that received a busy acknowledgment, thus maintaining the write if the command was successfully executed as indicated (122) with a successful acknowledge order, the earlier stored command is released (126) and the processing of the command stream continues (108).

Furthermore, the present invention, including the use of the REJECT signal, is not limited to the preservation of write order. It can also be used to speed up various bus operations by pushing error detection or correction to a later time. For instance, if a device is returning some read data from an error correcting memory, and there is not enough time to do the error detection or correction prior to putting the data on the bus, then the device may put the data on the bus "as if" it were good and then retract the transmission if necessary by sending REJECT in the subsequent cycle. The protocol, according to the present invention, may offer considerable performance advantages since most transmissions would proceed without the need for the REJECT cycle overhead. The normal system operation would not have to pay a performance penalty to accommodate the infrequent abnormal cycle from bad data. Modifications and/or substitutions made by one of ordinary skill in the art are written within the scope of the present invention which is not to be limited except by the claims which follow.

## Claims

1. A method of write order preservation in a pipeline computer system having a first device and a second device connected by a bus and operations defined over cycles, comprising the steps of: securing control of the bus by said first device; sending a first write command from said first device to said second device; storing the first write command in said first device until an acknowledge signal is received; sending an acknowledge signal from said second device to said first device, indicating the execution success of the write command in said second device; sending a second write command from said first device to said second device and, in the same cycle, receiving at said first device said acknowledge signal sent by said second device in response to said first write command; asserting a reject signal in the next cycle by said first device if said received acknowledge signal indicates that the write command was unsuccessfully executed; and cancelling in said second device the execution of the write command sent in the cycle prior to the assertion of said reject signal.

2. The method of claim 1, including the step of: returning to the step of sending a first write command.

3. The method of claim 2, including, after the step of storing the first write command, the steps of: releasing control of the bus by said first device; and resecuring the bus by the first device.

4. The method of claim 2, wherein additional devices are connected to the bus and receive write commands issued thereon, further including the step of: cancelling the execution in all said additional devices of operations responsive to said first write command.

FIG. 1

FIG. 2

CYCLE N

DEVICE "A" GETS BUS CONTROL — 102

DEVICE "A" SEND WRITE COMMAND TO DEVICE "B" — 104

DEVICE "A" STORES WRITE COMMAND — 106

100

CYCLE N+1

108 — DEVICE "A" HAS ANOTHER WRITE ? — Y

110 — DEVICE "A" RELEASED BUS ? — Y

N

109 — RELEASE BUS / OTHER DEVICE GETS BUS

111 — GET BUS CONTROL

112 — ISSUE NON-WRITE COMMAND

114 — DEVICE "B" SENDS ACKNOWLEDGE TO DEVICE "A"

116 — DEVICE "A" SEND NEXT WRITE COMMAND TO DEVICE "B"

118 — DEVICE "A" STORES NEXT WRITE COMMAND

DEVICE "A" RECEIVES ACKNOWLEDGE FROM DEVICE "B" — 120

CYCLE N+2

122 — DEVICE "B" ACKNOWLEDGES SUCCESSFUL FIRST WRITE COMMAND EXECUTION ?

Y — 126 — DEVICE "A" EARLIER STORED WRITE CMD. RELEASED

N — 124 — ASSERT REJECT SIGNAL

128 — DEVICE "B" CANCELS EXECUTION OF NEXT WRITE COMMAND

130 — DEVICE "A" RESETS WRITE COMMAND SEQUENCE, BEGINNING WITH COMMAND HAVING UNSUCCESSFUL WRITE EXECUTION